# EUROPÄISCHE PATENTSCHRIFT

(11) **EP 3 326 756 B1**
(45) Veröffentlichungstag und Bekanntmachung des Hinweises auf die Patenterteilung: **23.12.2020**
(21) Anmeldenummer: 17203277.3
(22) Anmeldetag: 23.11.2017
(51) Int. Cl.: B25B 11/00, B23Q 3/08, B23Q 1/00

(54) **ADAPTER ZUM ANBRINGEN AUF EINER KONSOLE EINER BEARBEITUNGSMASCHINE UND VERFAHREN ZUM ANSCHLIESSEN EINES DRUCKVERSORGENDEN SCHLAUCHS AN EINE BEARBEITUNGSMASCHINE**
ADAPTER FOR PLACING ON A CONSOLE OF A PROCESSING MACHINE AND METHOD FOR CONNECTING A PRESSURE SERVING HOSE TO A PROCESSING MACHINE
ADAPTATEUR D'APPLICATION SUR UNE CONSOLE D'UNE MACHINE D'USINAGE ET PROCÉDÉ DE RACCORDEMENT D'UN FLEXIBLE D'ALIMENTATION DE PRESSION À UNE MACHINE D'USINAGE

(30) Priorität: 24.11.2016 DE 102016223285
(43) Veröffentlichungstag der Anmeldung: 30.05.2018
(73) Patentinhaber: HOMAG GmbH, 72296 Schopfloch (DE)
(72) Erfinder: Martinetz, Jörg, 72280 Dornstetten (DE); Sturm, Christian, 72202 Nagold (DE); Haas, Manfred, 72175 Dornhan (DE)
(74) Vertreter: Hoffmann Eitle

(56) Entgegenhaltungen:
- DE-A1- 19 613 094
- DE-A1-102004 043 697
- DE-A1-102007 016 457
- DE-A1-102008 021 794
- DE-U1- 9 402 252

## Beschreibung

### Technisches Gebiet

Die Erfindung betrifft Bearbeitungsmaschinen, insbesondere CNC-Maschinen, die bevorzugt plattenförmige Werkstücke aus Holz, holzhaltigem Werkstoff, Verbundwerkstoff, Kunststoff oder dergleichen bearbeiten. Genauer gesagt betrifft die Erfindung einen Adapter, der sich auf eine Konsole für Werkstückhaltevorrichtungen einer solchen Bearbeitungsmaschine setzen lässt.

### Stand der Technik

Werkstücke werden an einer Bearbeitungsmaschine wie zum Beispiel einer CNC-Bearbeitungseinheit bekanntlich von Werkstückhaltevorrichtungen, beispielsweise Saugern, gehalten, die auf dafür vorgesehene Konsolen gesetzt werden. Die Bearbeitung erfolgt dann auf der den Saugern abgewandten Seite des Werkstücks und an dessen Rändern, und zum Beispiel auf so genannten Fünf-Achs-Bearbeitungsmaschinen sogar auch von unten auf der den Saugern zugewandten Seite des Werkstücks. Zum Versorgen der Sauger der Werkstückhaltevorrichtungen mit Unterdruck weisen die Konsolen bekanntlich mindestens eine druckdichte Leitung auf, die in Leitungsverbindung einerseits mit einer Reihe von Ausgängen aus der Konsole steht und andererseits mit einer Unterdruckquelle. Die Werkstückhaltevorrichtungen andererseits haben üblicherweise einen Flansch mit einer Flanschöffnung, die durch den Körper der Werkstückhaltevorrichtung hindurch mit dem Sauger der Werkstückhaltevorrichtung in druckdichter Leitungsverbindung steht. Der Flansch ist dann üblicherweise eingerichtet, sich (bei Anbringung der Werkstückhaltevorrichtung auf der Konsole) mit einem Ausgang der Konsole in druckdichte Leitungsverbindung bringen zu lassen, um von dort mit Unterdruck oder "Vakuum" versorgt, dies in den Sauger weiterzuleiten.

Weitere Beispiele für einen Adapter, der sich an einer solchen Konsole anbringen lässt - und dem Zweck dient, die Halteebene einer Werkstückhaltevorrichtung zu verändern - sind in der DE202008002364U1 und der DE19613094A1 beschrieben.

Im Bereich der Bearbeitungsmaschinen sind oftmals auch externe Verbraucher, zum Beispiel externe Spannmittel wie Spannschablonen, mit Unterdruck zu versorgen (aber auch, zum Beispiel pneumatische Werkzeuge, mit Überdruck). Dazu stehen bekanntlich stationäre Anschlussstellen von Vakuum- oder Druckversorgungssystemen zur Verfügung, üblicherweise mit genormten Kupplungen. Auch an den Bearbeitungsmaschinen selbst gibt es solche Anschlussstellen fest installiert.

Solche externen Verbraucher aber, und insbesondere die, die in sich bewegenden Bereichen der möglicherweise durchaus raumgreifen Bearbeitungsmaschinen zum Einsatz kommen sollen, stellen durch das erforderliche Ablegen der Versorgungsschlauchleitung zwischen Anschlussstelle und Verbraucher ein Sicherheitsrisiko dar. Lange Schläuche insbesondere können mit sich bewegenden Maschinenteilen in gefährliche Kollision geraten.

### Darstellung der Erfindung

Aufgabe der Erfindung ist es, im Bereich der genannten Bearbeitungsmaschinen eine einfache, kostengünstige, flexible und insbesondere sichere Möglichkeit bereitzustellen, externe Verbraucher, zum Beispiel externe Spannmittel wie Spannschablonen, mit dem erforderlichen Druck zu versorgen.

Erfindungsgemäß wird diese Aufgabe durch einen Adapter nach Anspruch 1 und ein Verfahren nach Anspruch 8 gelöst. Bevorzugte Ausgestaltungen sind in den Unteransprüchen angegeben.

Der erfindungsgemäße Adapter ist eingerichtet zum Anbringen an (oder insbesondere auf) einer Konsole einer Bearbeitungsmaschine für Werkstücke vorzugsweise aus Holz, holzhaltigem Werkstoff, Verbundwerkstoff oder Kunststoff. Eine solche Konsole weist typischerweise mindestens eine druckdichte Leitung in Leitungsverbindung mit mindestens einem Ausgangsstück mit einem Ausgang aus der Konsole auf, zum bestimmungsgemäßen Anschluss von Werkstückhaltevorrichtungen. Der Adapter umfasst einen Hauptkörper und eine Verbindungsschnittstelle daran, mittels der sich der Adapter auf der Konsole befestigen lässt.

Erfindungsgemäß umfasst der Adapter eine Kupplung, die auf das Anschließen eines Saug- und/oder Druckschlauchs eingerichtet ist und die mit einer Flanschöffnung eines Flansches an dem Adapter durch seinen Hauptkörper hindurch in druckdichter Leitungsverbindung steht. Der Flansch ist eingerichtet, sich mit dem mindestens einen Ausgangsstück der Konsole in druckdichte Leitungsverbindung bringen zu lassen.

Entsprechend dient das erfindungsgemäße Verfahren zum Anschließen eines Saug- und/oder Druckschlauchs an eine Bearbeitungsmaschine für Werkstücke, die vorzugsweise zumindest abschnittsweise aus Holz, holzhaltigem Werkstoff, Verbundwerkstoff oder Kunststoff bestehen. Der Schlauch ist dabei vorgesehen zum Versorgen eines Verbrauchers, insbesondere eines externen Spannmittels wie einer Spannschablone, mit Unterdruck oder Überdruck, und die Bearbeitungsmaschine besitzt eine Konsole mit mindestens einer Saug- und/oder Druckleitung in Leitungsverbindung mit mindestens einem Ausgangsstück mit einem Ausgang aus der Konsole.

Erfindungsgemäß wird in dem Verfahren zunächst der Schritt ausgeführt, auf der Konsole einen Adapter anzubringen, der einen Flansch mit einer Flanschöffnung aufweist sowie eine Kupplung, die mit der Flanschöffnung in druckdichter Leitungsverbindung steht. Die Anbringung des Adapters auf der Konsole erfolgt in druckdichter Leitungsverbindung seiner Flanschöffnung mit dem Ausgangsstück der Konsole. Anschließend kann an die Kupplung des Adapters ein Saug- und/oder Druckschlauch zur Versorgung eines Verbrauchers angeschlossen werden.

So lassen sich durch den Adapter und das Verfahren externe Verbraucher insbesondere auch in sich bewegenden Bereichen der Bearbeitungsmaschinen sicherer mit Vakuum (Unterdruck) oder auch pneumatisch versorgen (nämlich mit Überdruck - der sich durch die druckdichte Leitung in der Konsole ebenfalls zur Verfügung stellen lässt, indem die Konsolenleitung in Verbindung mit einer Überdruckquelle gebracht wird). Denn die Versorgung erfolgt nun erfindungsgemäß an der erfindungsgemäßen Kupplung an der Konsole, also möglicherweise an zentraler Stelle der Maschine, ohne durch das erforderliche Ablegen langer Versorgungsschlauchleitungen zwischen herkömmlicher Anschlussstelle und Verbraucher ein Sicherheitsrisiko darzustellen. Insbesondere an CNC-Maschinen mit angetriebenen, also sich bewegenden Konsolen ermöglicht die erfindungsgemäße Kupplung, die sich an einer solchen Konsole angebracht folglich mitbewegt, auch das sichere Anschließen von Verbrauchern, die sich ebenfalls mitbewegen sollen. So stellt die Erfindung eine einfache, kostengünstige, flexible und insbesondere sichere Möglichkeit bereit, externe Verbraucher, zum Beispiel externe Spannmittel wie Spannschablonen, im Bereich der genannten Bearbeitungsmaschinen mit Unterdruck zu versorgen oder zum Beispiel pneumatische Werkzeuge mit Überdruck.

Erfindungsgemäß lässt sich die Verbindungsschnittstelle des Adapters mittels einer Klemmbefestigung kraft- und bevorzugt auch formschlüssig auf der Konsole befestigen, was eine zuverlässige Sicherheit der Verbindung herstellt. Die Festigkeit der Verbindung erlaubt auch Bearbeitungsschritte, bei denen durch zum Beispiel versehentliche Zugkräfte am angeschlossenen Schlauch über die Kupplung Querkräfte auf den Adapter wirken. Vorzugsweise umfasst die Klemmbefestigung der Verbindungsschnittstelle eine Schnellverschluss- und/oder Schnellspannvorrichtung etwa mit einem Exzenter und/oder einem zum Beispiel federvorgespannten Hebel und/oder eine Schwalbenschwanzprofilierung. Dies sind Maßnahmen zum Beschleunigen der Handhabung und zum Vergrößern der Festigkeit der Verbindung, was die Befestigung des Adapters an der Konsole wiederum sicherer macht.

Auch wenn das Ausgangstück an der Konsole eine bloße Mündung in den Ausgang sein kann, ist der Adapter vorzugsweise auf Konsolen eingerichtet, die mindestens ein Ausgangsstück mit einem Magnetventil aufweisen. Dieses verschließt den Ausgang, solange dieser nicht (üblicherweise von einer dort angebrachten Werkstückhaltevorrichtung zu deren Unterdruckversorgung) als Durchgang gebraucht wird. Der Flansch weist in dieser Ausgestaltung ein magnetisches Element (zum Beispiel einen ferromagnetischen Metallstreifen) auf, das eingerichtet ist, das Magnetventil zu betätigen, nämlich zu öffnen, weil das magnetische Element dann im Bereich des Magnetventils positioniert ist, wenn der Adapter auf der Konsole so angebracht ist, dass die Flanschöffnung des Adapters mit dem Ausgangsstück der Konsole in Leitungsverbindung gebracht ist. Diese Verbindung ist vorzugsweise sogleich druckdicht, und das sich öffnende Magnetventil kann den Adapter und insbesondere seine Kupplung sogleich frei von Leckage mit dem Druck aus der Konsolenleitung versorgen.

Das System nach Anspruch 4 ermöglicht auch, den Adapter, der quer zur Längsrichtung der Konsole in seiner Position von der Verbindungsschnittstelle vorzugsweise kraft- und/oder formschlüssig befestigt und festgelegt ist, in Längsrichtung über einem Ausgangsstück anzubringen, ohne genau auf das Fluchten von Flansch (am Adapter) und Ausgang (an der Konsole) achten zu müssen - sondern eben die Länge des Langlochs sozusagen als Spielraum zu haben.

Vorzugsweise ist der Adapter in dem System nach Anspruch 5 eingerichtet zum Anbringen auf einer ebenen Außenfläche einer Konsole, deren mindestens eines Ausgangsstück in der ebenen Außenfläche der Konsole angeordnet ist. Die Flanschöffnung ist in dieser Ausgestaltung von einer Dichtung umgeben, die auf dieser ebenen Außenfläche den Ausgang des Ausgangsstücks der Konsole druckdicht umgibt - und zwar, wenn die Flanschöffnung als Langloch ausgebildet ist, wegen der Länge des Langlochs an jeder der beliebigen Stellen des möglichen Anbringungsbereichs des Adapters an der Konsole.

Wenn die längliche Konsole in dem System nach Anspruch 6 in ihrer Längsrichtung mehrere (mindestens zwei) zueinander fluchtend in einer Reihe verteilte Ausgangsstücke aufweist (was üblicherweise der Falls ist), kann der Bereich, in dem der Adapter sich auf der Konsole an einer beliebigen Stelle in druckdichter Leitungsverbindung mit einem Ausgangsstück anbringen lässt, länger sein als die Länge des Langlochs. Dazu ist das Langloch länger als der Abstand der mindestens zwei Ausgangsstücke voneinander, so dass dann, wenn der Adapter auf der Konsole in ihrer Längsrichtung (etwa mit gelöster Klemmbefestigung zum Finden einer gewünschten Anbringungsposition) entlanggeschoben wird, jeweils bereits das nächste Ausgangsstück der Reihe mit dem Langloch schon in Leitungsverbindung kommt, wenn das benachbarte Ausgangsstück die Leitungsverbindung mit dem Langloch noch hat.

Erfindungsgemäß ist auch ein Adapter zusammen mit einer Konsole wie soweit beschrieben oder ein Adapter zusammen mit einer Bearbeitungsmaschine mit mindestens einer Konsole wie soweit beschrieben, die also jeweils ein aufeinander abgestimmtes System bilden können.

### Kurze Beschreibung der Zeichnungen

Bevorzugte Ausführungsformen der vorliegenden Erfindung und weitere Ausgestaltungen und Vorteile ergeben sich aus der nachfolgenden Beschreibung der Abbildungen:
- Fig. 1: zeigt eine geschnittene Seitenansicht eines erfindungsgemäßen Adapters befestigt an einer Konsole einer Bearbeitungsmaschine;
- Fig. 2: zeigt einen Ausschnitt einer räumlichen Ansicht einer Bearbeitungsmaschine, die mehrere Konsolen aufweist, für die die erfindungsbemäße Vorrichtung vorgesehen ist;
- Fig. 3: zeigt eine räumliche Ansicht des erfindungsbemäßen Adapters aus Fig. 1 schräg von unten; und
- Fig. 4: zeigt eine räumliche Ansicht des erfindungsbemäßen Adapters aus Fig. 1 schräg von oben.

### Ausführliche Beschreibung bevorzugter Ausführungsformen

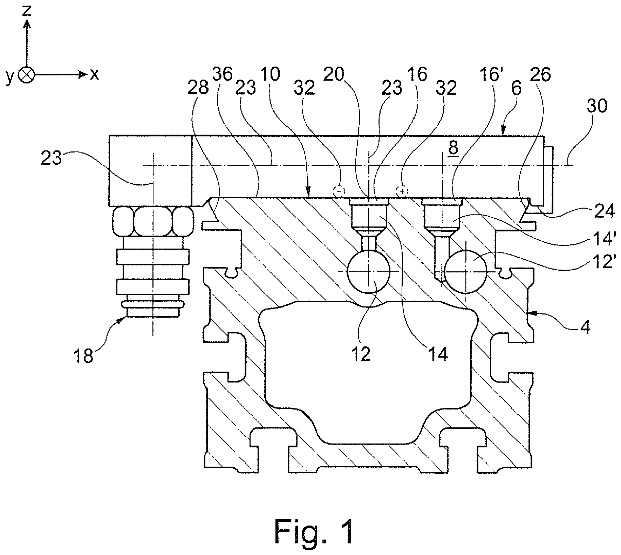

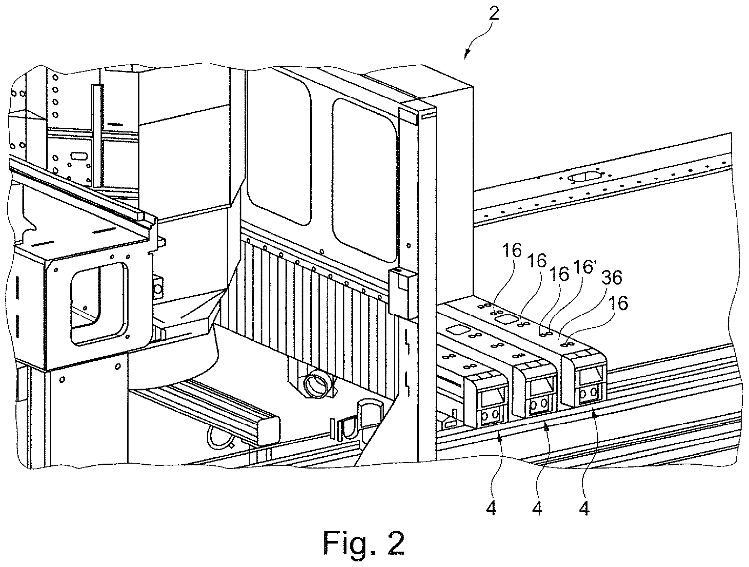

In Fig. 1 und 2 wird die Erfindung an einer CNC-Bearbeitungsmaschine 2 eingesetzt, die mehrere Konsolen 4 aufweist, von denen in Fig. 2 drei gezeigt sind. Die abgebildeten Konsolen 4 sind längliche, horizontale Grundelemente der Bearbeitungsmaschine 2, auf der verschiedene Vorrichtungen, beispielsweise Werkstückhaltevorrichtungen (nicht dargestellt), bereichsweise an beliebigen Stellen längs der Konsole 4 (in y-Richtung) befestigt werden können: In Fig. 1 werden die Richtungsbezeichnungen x, y, z eines kartesischen Koordinatensystems verwendet. Die x-Richtung geht dabei quer zur Konsole 4, die y-Richtung längs der Konsole 4 und die z-Richtung senkrecht zu den beiden ersten Richtungen.

Ein Adapter 6, der in Fig. 1, 3 und 4 gezeigt ist, besteht im Wesentlichen aus einem Hauptkörper 8 mit einer Verbindungsschnittstelle 10 zum Anbringen auf einer der Konsolen 4. Der Hauptkörper 8 besteht vorzugsweise aus Metall, zum Beispiel einer Aluminiumlegierung, kann aber auch aus Kunststoff hergestellt sein, und ist einstückig mit der Schnittstelle 10. Der Hauptkörper 8 des Adapters 6 kann eine beliebige Geometrie haben, ist wie abgebildet jedoch derart ausgestaltet, dass er in y-Richtung wesentlich kürzer ausgebildet ist, als die Breite der Bearbeitungsmaschine 2, und somit auch als die Länge der Konsolen 4, die sich über die Gesamtbreite dieser Bearbeitungsmaschine 2 erstreckt. Im Beispiel aus Fig. 1, 3 und 4 ist der Hauptkörper 8 des Adapters 6 im Wesentlichen rechtwinklig mit bereichsweise gerundeten Kanten ausgebildet, allerdings kann er jede beliebige geometrische Formgestaltung haben, solange insbesondere die Druckfestigkeit des Adapters 6 darunter nicht leidet.

Die Konsolen 4 weisen mit Blick auf Fig. 1 zwei druckdichte Leitungen 12, 12' in Leitungsverbindung mit jeweils einer Reihe Ausgangsstücke 14, 14' jeweils mit einem Ausgang 16, 16' auf, der jeweils von der Leitung 12, 12' aus der Konsole 4 hinausführt.

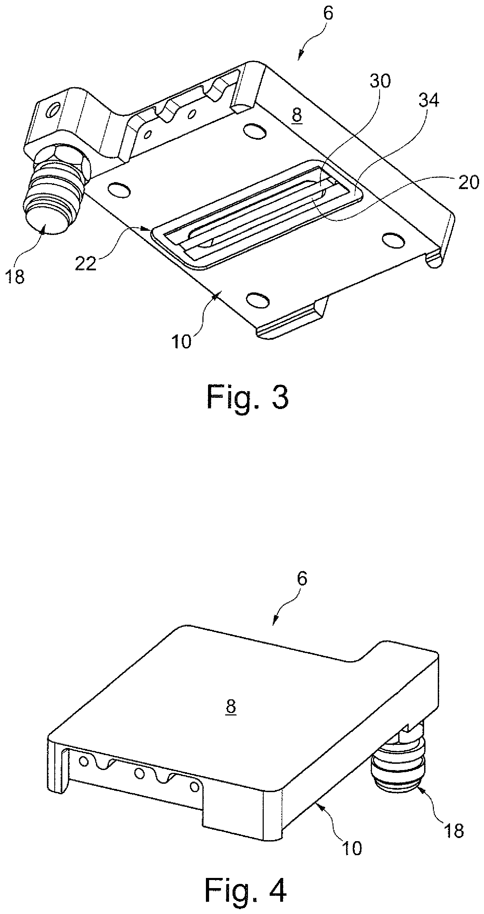

Der Adapter 6 hat eine genormte Kupplung 18, die auf das Anschließen eines Saug- und/oder Druckschlauchs (nicht dargestellt) eingerichtet ist und die mit einer Flanschöffnung 20 eines Flansches 22 (Fig. 3) an dem Adapter 6 durch seinen Hauptkörper 8 hindurch in druckdichter Leitungsverbindung 23 (nur ihre Mittellinie 23 ist in Fig. 1 dargestellt) steht. Der Flansch 22 ist eingerichtet, sich mit den Ausgangsstücken 14 der Konsole 4 in druckdichte Leitungsverbindung bringen zu lassen.

Die Verbindungsschnittstelle 10 des Adapters 6 ist mittels einer Klemmbefestigung 24 kraft- und formschlüssig auf der Konsole 4 befestigt. Die Klemmbefestigung 24 der Verbindungsschnittstelle 10 umfasst eine Schnellverschlussvorrichtung mit einer Schwalbenschwanzprofilierung 26, 28, von der adapterseitig in Fig. 1 nur die rechte (mittels seitlicher Verschraubung 30 im Hauptkörper 8 befestigte) Klemmwange 24 abgebildet ist. Die linke Klemmwange, mit Schnellspannhebelbetätigung, ist der Übersichtlichkeit halber nicht dargestellt, und greift von links in die linke Schwalbenschwanzprofilierung 28.

Die Ausgangsstücke 14 der Konsole 4 weisen jeweils ein Magnetventil (nicht dargestellt) auf. Dieses verschließt den jeweiligen Ausgang 16 auf bekannte Weise, solange dieser nicht (üblicherweise von einer dort angebrachten Werkstückhaltevorrichtung zu deren Unterdruckversorgung) als Durchgang gebraucht wird. Der Flansch 22 weist ein magnetisches Element 30 (nämlich einen ferromagnetischen Metallstreifen 30; Fig. 3) auf, das eingerichtet ist, das Magnetventil (nicht dargestellt) zu öffnen, wenn das magnetische Element 30 im Bereich des Magnetventils positioniert ist - wenn nämlich der Adapter 6 auf der Konsole 4 so angebracht ist, dass die Flanschöffnung 20 (nur ihre Mittellinie 20 ist in Fig. 1 dargestellt) des Adapters 6 mit dem Ausgangsstück 14 der Konsole 4 fluchtend in Leitungsverbindung gebracht ist (Fig. 1).

Diese Verbindung ist durch einen Dichtring 32 (Fig. 1) in einer Dichtringnut 34 (Fig. 3), der die als Langloch 20 (Fig. 3; dazu sogleich) ausgebildete Flanschöffnung 20 umgibt, druckdicht, und das geöffnete Magnetventil (nicht dargestellt) im Ausgangsstück 14 kann den Adapter 6 und insbesondere seine Kupplung 18 frei von Leckage mit dem Druck aus der Konsolenleitung 12 durch die Leitungsverbindung 23 hindurch versorgen (Fig. 1). Denn die Ausgänge der Ausgangsstücke 14 mit den Magnetventilen (nicht dargestellt) sind in einer ebenen Außenfläche 36 der Konsole 4, nämlich deren Oberseite 36, angeordnet.

Die Dichtung 32 in der Dichtringnut 34 um das Langloch 20 umgibt auf der ebenen Außenfläche 36 den Ausgang des Ausgangsstücks 14 der Konsole 4 druckdicht - wegen der Länge des Langlochs 20 an beliebiger Stelle des (durch die Länge des Langlochs 20 definiert) möglichen Anbringungsbereichs des Adapters 6 an der Konsole 4. So ist der Adapter 6 eingerichtet zum Anbringen auf der länglichen Konsole 4 an einer innerhalb eines gewissen Bereichs der Längsrichtung (y) der Konsole beliebigen Stelle. Dazu verläuft die längliche Erstreckungsrichtung der Langloch-Flanschöffnung 20 in der Längsrichtung der Konsole 6, wenn der Adapter 6 bestimmungsgemäß orientiert (wie in Fig. 1 abgebildet) auf der Konsole 4 angebracht ist. Das Langloch 20 ist dazu so dimensioniert und orientiert, dass es an jeder der beliebigen Stellen (der Anbringung des Adapters 6 auf der Konsole 4) mit einem der Ausgänge 16 der Ausgangsstücke 14 der Konsole fluchtend in druckdichter Leitungsverbindung steht.

Dies ermöglicht auch ganz vordergründig, den Adapter 6, der gemäß Fig. 1 in Querrichtung (x) der Konsole 4 in seiner Position von der Klemmbefestigung 24 kraft- und formschlüssig auf der Konsole 4 in deren Schwalbenschwanzprofilierung 26, 28 gehalten ist, bei gelöster Klemmbefestigung 24 in Längsrichtung (y) über einem Ausgangsstück 14 anzubringen, ohne sehr genau auf das Fluchten von Flanschöffnung 20 (am Adapter 6) und Ausgang 16 (an der Konsole 4) achten zu müssen - sondern eben die Länge des Langlochs 20 sozusagen als Spielraum zu haben.

## Patentansprüche

1. Adapter (6) zum Anbringen auf einer Konsole (4) einer Bearbeitungsmaschine (2) zum Bearbeiten von Werkstücken, die vorzugsweise zumindest abschnittsweise aus Holz, holzhaltigem Werkstoff, Verbundwerkstoff oder Kunststoff bestehen, umfassend
einen Hauptkörper (8) und eine Verbindungsschnittstelle (10) an dem Hauptkörper, mittels der sich der Adapter (6) auf der Konsole (4) befestigen lässt,
eine Kupplung (18), die auf das Anschließen eines Saug- und/oder Druckschlauchs eingerichtet ist, und
einen Flansch (22) mit einer Flanschöffnung (20), die durch den Hauptkörper (8) hindurch mit der Kupplung (18) in druckdichter Leitungsverbindung (23) steht und die eingerichtet ist, sich mit einem Ausgang (16) eines Ausgangsstücks (14) der Konsole in druckdichte Leitungsverbindung bringen zu lassen,
**dadurch gekennzeichnet,**
**dass** die Verbindungsschnittstelle (10) sich mittels einer Klemmbefestigung (24, 26, 28) kraftschlüssig an der Konsole (4) befestigen lässt.

2. Adapter nach Anspruch 1, **dadurch gekennzeichnet, dass** die Verbindungsschnittstelle (10) sich formschlüssig an der Konsole (4) befestigen lässt.

3. Adapter nach einem der vorhergehenden Ansprüche, **dadurch gekennzeichnet, dass** der Flansch (22) ein magnetisches Element (30) aufweist, das eingerichtet ist, ein Magnetventil (14) des Ausgangsstücks (14) durch wirksame Nähe zu öffnen, wenn der Adapter (6) auf der Konsole (4) so angebracht ist, dass die Flanschöffnung (20) des Adapters mit dem Ausgangsstück (14) der Konsole in Leitungsverbindung gebracht ist.

4. System, umfassend eine Konsole und einen Adapter nach einem der vorhergehenden Ansprüche, **dadurch gekennzeichnet, dass** der Adapter (6) eingerichtet ist, an einer länglichen Konsole (4) an einer innerhalb eines Bereichs der Längsrichtung (y) der Konsole beliebigen Stelle angebracht zu werden, und dass die Flanschöffnung (20) ein Langloch (20) ist, das bei bestimmungsgemäßer Anbringungsorientierung des Adapters auf der Konsole in der Längsrichtung (y) länglich ist und das eingerichtet ist, an jeder der beliebigen Stellen sich mit dem Ausgangsstück (14) der Konsole in druckdichte Leitungsverbindung bringen zu lassen.

5. System, nach Anspruch 4, **dadurch gekennzeichnet, dass** der Adapter (6) eingerichtet ist, auf einer ebenen Außenfläche (36) der länglichen Konsole (4) mit einem Ausgangsstück (14) in der ebenen Außenfläche (36) der Konsole angebracht zu werden, und dass das Langloch (20) von einer Dichtung (32) umgeben ist, die auf der ebenen Außenfläche an jeder der beliebigen Stellen des Bereichs den Ausgang (16) des Ausgangsstücks (14) der Konsole druckdicht umgibt.

6. System nach Anspruch 4 oder 5, **dadurch gekennzeichnet, dass** die Konsole (4) mindestens zwei in der Längsrichtung (y) zueinander fluchtend verteilte Ausgänge (16) aufweist, und dass das Langloch (20) in der Längsrichtung (y) länger ist als der Abstand der mindestens zwei Ausgänge (16), so dass der Bereich, in dem der Adapter (6) sich auf der länglichen Konsole (4) an einer beliebigen Stelle in druckdichte Leitungsverbindung mit einem Ausgang (16) eines Ausgangsstücks (14) anbringen lässt, länger ist als die Länge des Langlochs.

7. Bearbeitungsmaschine (2) zum Bearbeiten von Werkstücken, die vorzugsweise zumindest abschnittsweise aus Holz, holzhaltigem Werkstoff, Verbundwerkstoff oder Kunststoff bestehen, mit einem Adapter (6) nach einem der Ansprüche 1 bis 3 und mindestens einer Konsole (4), oder mit einem System nach einem der Ansprüche 4 bis 6, wobei die Konsole mindestens eine Saug- und/oder Druckleitung (12) in Leitungsverbindung mit mindestens mit einem Ausgang (16) eines Ausgangsstücks (14) der Konsole aufweist.

8. Verfahren zum Anschließen eines Saug- und/oder Druckschlauchs, der zum Versorgen eines Verbrauchers, insbesondere eines externen Spannmittels wie einer Spannschablone, mit Unterdruck oder Überdruck in einer Bearbeitungsmaschine (2) für Werkstücke, die vorzugsweise zumindest abschnittsweise aus Holz, holzhaltigem Werkstoff, Verbundwerkstoff oder Kunststoff bestehen, wobei die Bearbeitungsmaschine mindestens eine Konsole (4) mit mindestens einer Saug- und/oder Druckleitung (12) in Leitungsverbindung mit mindestens einem Ausgangsstück (14) mit einem Ausgang (16) aus der Konsole aufweist, mit den Schritten:
Anbringen eines Adapters (6), der einen Flansch (22) mit einer Flanschöffnung (20) und eine Kupplung (18) aufweist, die mit der Flanschöffnung in druckdichter Leitungsverbindung (23) steht, auf der Konsole, und zwar in druckdichte Leitungsverbindung der Flanschöffnung mit dem Ausgang (16) des Ausgangsstücks (14) der Konsole (4),
kraftschlüssiges Befestigen der Verbindungsschnittstelle des Adapters an der Konsole mittels einer Klemmbefestigung und
Herstellen einer druckdichten Leitungsverbindung zwischen dem Verbraucher und der Kupplung (18) des Adapters (6).

9. Verfahren nach Anspruch 8, wobei das Herstellen der druckdichten Leitungsverbindung das Anschließen eines Saug- und/oder Druckschlauchs an die Kupplung (18) des Adapters (6) umfasst.

10. Verfahren nach Anspruch 8 oder 9, wobei das Verfahren den Schritt des Öffnens eines Magnetventils des Ausgangsstücks (14) der Konsole (4) durch ein magnetisches Element (30) des Flansches (22) beim Anbringen des Adapters (6) auf der Konsole (4) umfasst.

## Claims

1. Adapter (6) for placing on a console (4) of a processing machine (2) for processing workpieces which preferably consist at least in sections of wood, wood-containing material, composite material or plastic, comprising
a main body (8) and a connection interface (10) on the main body by means of which the adapter (6) can be fixed to the console (4),
a coupling (18) which is configured for the connection of a suction and/or pressure hose, and
a flange (22) with a flange opening (20) which, passing through the main body (8), is in pressure-tight line connection (23) with the coupling (18) and which is configured to be brought into a pressure-tight line connection with an output (16) of an output piece (14) of the console,
**characterised in that**
the connection interface (10) can be fixed to the console (4) in a force-locking manner by means of a clamp fastening (24, 26, 28).

2. Adapter according to claim 1, **characterised in that** the connection interface (10) can be fixed to the console (4) in a form-locking manner.

3. Adapter according to one of the preceding claims, **characterised in that** the flange (22) has a magnetic element (30) which is configured to open a solenoid valve (14) of the output piece (14) through effective proximity if the adapter (6) is attached to the console (4) in such a way that the flange opening (20) of the adapter is brought into line connection with the output piece (14) of the console.

4. System comprising a console and an adapter according to one of the preceding claims, **characterised in that** the adapter (6) is configured to be attached to an elongated console (4) at any point within a region of the longitudinal direction (y) of the console, and that the flange opening (20) is a slot (20) which, if the adapter is attached to the console in the correct orientation, is elongated in the longitudinal direction (y) and which is configured to be brought into pressure-tight line connection with the output piece (14) of the console at any of the available points.

5. System according to claim 4, **characterised in that** the adapter (6) is configured to be attached on a flat outer surface (36) of the elongated console (4) with an output piece (14) in the flat outer surface (36) of the console, and that the slot (20) is surrounded by a seal (32) which surrounds the output (16) of the output piece (14) of the console on the flat outer surface in a pressure-tight manner at any of the available points within the region.

6. System according to claim 4 or 5, **characterised in that** the console (4) has at least two outputs (16), distributed in alignment with one another in the longitudinal direction (y), and that the slot (20) is longer in the longitudinal direction (y) than the distance between the at least two outputs (16), so that the region of the elongated console (4) within which the adapter (6) can be attached at any point in pressure-tight line connection with an output (16) of an output piece (14) is longer than the length of the slot.

7. Processing machine (2) for processing workpieces which preferably consist at least in sections of wood, wood-containing material, composite material or plastic, with an adapter (6) according to one of the claims 1 to 3 and at least one console (4), or with a system according to one of the claims 4 to 6, wherein the console has at least one suction and/or pressure line (12) in line connection with at least [with¹] one output (16) of an output piece (14) of the console.
¹ Assumed to be an error in the original German

8. Method for connecting a suction and/or pressure hose to supply a consumer, in particular an external clamping means such as a clamping template, with underpressure or overpressure in a processing machine (2) for workpieces which preferably consist at least in sections of wood, wood-containing material, composite material or plastic, wherein the processing machine has at least one console (4) with at least one suction and/or pressure line (12) in line connection with at least one output piece (14) with an output (16) from the console, comprising the steps:
attaching an adapter (6), which has a flange (22) with a flange opening (20) and a coupling (18) which is in pressure-tight line connection (23) with the flange opening, to the console, such that the flange opening is in pressure-tight line connection with the output (16) of the output piece (14) of the console (4),
fastening the connection interface of the adapter to the console in a force-locking manner by means of a clamp fastening and
establishing a pressure-tight line connection between the consumer and the coupling (18) of the adapter (6).

9. Method according to claim 8, wherein the establishment of the pressure-tight line connection comprises the connection of a suction and/ or pressure hose to the coupling (18) of the adapter (6).

10. Method according to claim 8 or 9, wherein the method includes the step of opening a solenoid valve of the output piece (14) of the console (4) by a magnetic element (30) of the flange (22) on attaching the adapter (6) to the console (4).

## Revendications

1. Adaptateur (6) pour la pose sur une console (4) d'une machine d'usinage (2) destinée à usiner des pièces qui sont de préférence au moins en partie en bois, en matériau contenant du bois, en matériau composite ou en matière plastique, comprenant
un corps principal (8) et une interface de liaison (10) sur le corps principal, au moyen de laquelle l'adaptateur (6) peut être fixé sur la console (4),
un couplage (18) qui est aménagé pour le raccordement d'un tuyau d'aspiration et/ou de pression, et
une bride (22) comportant une ouverture de bride (20) qui est en liaison de conduite étanche (23) avec le couplage (18) au travers du corps principal (8) et qui est aménagée pour pouvoir être mise en liaison de conduite étanche avec une sortie (16) d'une pièce de sortie (14) de la console,
**caractérisé en ce que**
l'interface de liaison (10) peut être fixée à la console (4) par complémentarité de force au moyen d'une fixation par serrage (24, 26, 28).

2. Adaptateur selon la revendication 1, **caractérisé en ce que** l'interface de liaison (10) peut être fixée à la console (4) par complémentarité de forme.

3. Adaptateur selon l'une quelconque des revendications précédentes, **caractérisé en ce que** la bride (22) présente un élément magnétique (30) qui est aménagé pour ouvrir une électrovanne (14) de la pièce de sortie (14) par proximité effective lorsque l'adaptateur (6) est monté sur la console (4), de telle sorte que l'ouverture de bride (20) de l'adaptateur est amenée en liaison de conduite avec la pièce de sortie (14) de la console.

4. Système, comprenant une console et un adaptateur selon l'une quelconque des revendications précédentes, **caractérisé en ce que** l'adaptateur (6) est aménagé pour être appliqué contre une console longitudinale (4) à un emplacement quelconque à l'intérieur d'une zone de la direction longitudinale (y) de la console, et **en ce que** l'ouverture de bride (20) est un trou oblong (20) qui est longitudinal dans un sens de montage conforme de l'adaptateur sur la console dans la direction longitudinale (y) et qui est aménagé pour être amené en liaison de conduite étanche à chacun des emplacements quelconques avec la pièce de sortie (14) de la console.

5. Système, selon la revendication 4, **caractérisé en ce que** l'adaptateur (6) est aménagé pour être posé sur une surface extérieure plane (36) de la console longitudinale (4) avec une pièce de sortie (14) dans la surface extérieure plane (36) de la console, et **en ce que** le trou oblong (20) est entouré d'un joint (32) qui entoure de façon étanche la sortie (16) de la pièce de sortie (14) de la console sur la surface extérieure plane à chacun des emplacements quelconques de la zone.

6. Système selon la revendication 4 ou 5, **caractérisé en ce que** la console (4) présente au moins deux sorties (16) réparties et respectivement alignées dans la direction longitudinale (y), et **en ce que** le trou oblong (20) est plus long dans la direction longitudinale (y) que l'intervalle entre les au moins deux sorties (16), de sorte que la zone dans laquelle l'adaptateur (6) peut être posé sur la console longitudinale (4) à un endroit quelconque en liaison de conduite étanche avec une sortie (16) d'une pièce de sortie (14) est plus longue que la longueur du trou oblong.

7. Machine d'usinage (2) destinée à usiner des pièces qui sont de préférence au moins en partie en bois, en matériau contenant du bois, en matériau composite ou en matière plastique, avec un adaptateur (6) selon l'une quelconque des revendications 1 à 3 et au moins une console (4), ou avec un système selon l'une quelconque des revendications 4 à 6, dans laquelle la console présente au moins un tuyau d'aspiration et/ou de pression (12) en liaison de conduite avec au moins une sortie (16) d'une pièce de sortie (14) de la console.

8. Procédé de raccordement d'un tuyau d'aspiration et/ou de pression, qui permet d'alimenter un appareil consommateur, en particulier un moyen de serrage externe tel qu'un gabarit de serrage, en pression négative ou en pression positive dans une machine d'usinage (2) de pièces qui sont de préférence au moins en partie en bois, en matériau contenant du bois, en matériau composite ou en matière plastique, dans lequel la machine d'usinage présente au moins une console (4) avec au moins une conduite d'aspiration et/ou de pression (12) en liaison de conduite avec au moins une pièce de sortie (14) avec une sortie (16) de la console, avec les étapes consistant à :
poser un adaptateur (6) présentant une bride (22) avec une ouverture de bride (20) et un couplage (18) qui est en liaison de conduite étanche (23) avec l'ouverture de bride, sur la console, et cela en liaison de conduite étanche de l'ouverture de bride avec la sortie (16) de la pièce de sortie (14) de la console (4),
fixer par complémentarité de force l'interface de liaison de l'adaptateur sur la console au moyen d'une fixation par serrage et
réaliser une liaison de conduite étanche entre l'appareil consommateur et le couplage (18) de l'adaptateur (6).

9. Procédé selon la revendication 8, dans lequel la réalisation de la liaison de conduite étanche comprend le raccordement d'un tuyau d'aspiration et/ou de pression sur le couplage (18) de l'adaptateur (6).

10. Procédé selon la revendication 8 ou 9, dans lequel le procédé comprend l'étape d'ouverture d'une électrovanne de la pièce de sortie (14) de la console (4) par un élément magnétique (30) de la bride (22) lors de la pose de l'adaptateur (6) sur la console (4).
